# EUROPEAN PATENT SPECIFICATION

(11) **EP 3 828 439 B1**
(45) Date of publication and mention of the grant of the patent: **20.04.2022**
(21) Application number: 20162369.1
(22) Date of filing: 11.03.2020
(51) Int. Cl.: F16H 25/24

(54) **BALL SCREW ASSEMBLY**
KUGELGEWINDEANORDNUNG
ENSEMBLE FORMANT VIS SPHÉRIQUE

(30) Priority: 29.11.2019 CN 201911205346
(43) Date of publication of application: 02.06.2021
(73) Proprietor: Lee, Szu-Ying, New Taipei City 220 (TW)
(72) Inventor: Lee, Szu-Ying, New Taipei City 220 (TW)
(74) Representative: Viering, Jentschura & Partner mbB Patent- und Rechtsanwälte

(56) References cited:
- EP-A1- 0 281 491
- WO-A1-98/09098
- US-A- 5 388 475

## Description

### BACKGROUND

### Technical Field

The invention relates to a ball screw assembly, in particular, to a ball screw assembly with an axial opening.

### Related Art

EP 0281491 A discloses a ball screw assembly. A further ball screw assembly is known from WO 98/09098 A1. The ball screw device known to the inventor is provided for converting a rotation motion into a linear motion through the cooperation between the screw and the nut. By the cooperation between the ball nut provided with balls rolling in the circulating race and the screw provided with a threaded groove, the friction between the ball nut and the screw can be reduced during the operation.

Most of the ball nuts known to the inventor have complete cylinder shapes. When the length of the screw is longer and is provided with a supporting holder for preventing the screw from sagging, a resilient mechanism is provided on the supporting holder. Hence, when the ball nut rotates around the screw and passes the portion of the screw having the supporting holder, the supporting holder is temporally moved away from the screw through the resilient mechanism. Next, after the ball nut passes the portion of the screw having the supporting holder, the resilient mechanism moves the supporting holder back to the supporting position for providing a sufficient supporting force for the screw.

### SUMMARY

However, when taking the aforementioned configurations, additional resilient mechanisms are configured at the supporting holders. Furthermore, when the supporting holder is at a position away from the screw, the portion of the screw corresponding to the supporting holder may sag due to its weight. As a result, when the open nut passes the portion of the screw having the supporting holder at the position away from the screw, the screw may encounter deflection, or the balls may not roll in the threaded groove properly due to the bending of the screw. Consequently, during the application of the ball guider device, the manufacturing precision becomes an issue and is to be considered.

In view of these, one embodiment of the invention provided a ball screw assembly. The ball screw assembly comprises a guider, an open nut, an open shield, a first circulator, a second circulator, and a ball circulating assembly. The guider has a central axis and a spiral channel. The spiral channel is annularly disposed around an outer periphery of the guider. The open nut is slidably fitted over the guider. The open nut comprises an axial cylinder, and the axial cylinder has an axial opening. The axial cylinder has a first axial wall and a second axial wall respectively located at two opposite sides of the axial opening. The axial cylinder comprises an inner annular wall and an outer annular wall. The inner annular wall has an inner spiral channel. The inner spiral channel corresponds to the spiral channel of the guider. The inner spiral channel and the spiral channel form an inner ball race.

Moreover, the open shield is coaxially fitted over an outer periphery of the axial cylinder. The open shield has an inner peripheral wall. The inner peripheral wall corresponds to the outer annular wall of the axial cylinder. The inner peripheral wall and the outer annular wall form an outer spiral ball race. In a projection of a virtual plane of the open nut, the outer spiral ball race is obliquely configured with respect to the central axis, the virtual plane is perpendicular to a symmetrical plane defined on the open shield upon the open shield is observed from one end of the central axis, and the virtual plane is parallel to the central axis. The first circulator is disposed on the first axial wall. The first circulator comprises a first curve. Two ends of the first curve are respectively in communication with the inner ball race and the outer spiral ball race. The second circulator is disposed on the second axial wall. The second circulator comprises a second curve. Two ends of the second curve are respectively in communication with the inner ball race and the outer spiral ball race. The ball circulating assembly comprises a plurality of balls. The inner ball race, the first curve, the outer spiral ball race, and the second curve form a ball circulating race. The ball circulating assembly rolls in the ball circulating race.

Accordingly, based on one or some embodiments of the invention the axial cylinder of the open nut has the axial opening. Hence, when the open nut is disposed on the guider (e.g., a screw or a conversion rod) and moves along the guider, even if a supporting holder is configured below the guider, the open nut can pass the portion of the guider having the supporting holder through the axial opening, so that the open nut and the supporting holder do not interfere with each other. Therefore, the resilient mechanism on the supporting holder can be omitted. Moreover, when the open nut passes the portion of the guider having the supporting holder, the supporting holder is retained in a supporting state for the guider. Therefore, since the supporting holder does not detach from the guider, the guider does not sag or deform, and the manufacturing precision of the ball screw assembly during the application does not seriously affect the performance of the ball screw assembly. Furthermore, the open shield not only can form the outer spiral ball race with the axial cylinder for the balls rolling in the outer spiral ball race, but also provides a dustproof function.

In one or some embodiments, a surface of the inner peripheral wall and the outer annular wall further form a second outer spiral ball race. The two ends of the first curve are respectively in communication with the inner ball race and the second outer spiral ball race. The two ends of the second curve are respectively in communication with the inner ball race and the second outer spiral ball race. The inner ball race, the first curve, the second outer spiral ball race, and the second curve form a second ball circulating race. The ball circulating assembly rolls in the second ball circulating race.

In one or some embodiments, the first curve is obliquely configured opposite to a short side of the first circulator, and the second curve is obliquely configured opposite to a short side of the second circulator.

In one or some embodiments, the first curve and a short side of the first circulator are arranged parallel to each other; the second curve and a short side of the second circulator are arranged parallel to each other.

In one or some embodiments, the first circulator comprises a plurality of the first curves, and the first curves are arranged parallel to each other. The second circulator comprises a plurality of the second curves, and the second curves are arranged parallel to each other.

In one or some embodiments, the ball screw assembly further comprises a ball retainer, and the balls are connected in series by the ball retainer.

In one or some embodiments, the outer annular wall of the axial cylinder has an outer channel, and the outer channel and the inner peripheral wall form the outer spiral ball race. Moreover, in one or some embodiments, the inner peripheral wall of the open shield has an inner channel corresponding to the outer channel, and the outer channel and the inner channel form the outer spiral ball race.

In one or some embodiments, the inner peripheral wall of the open shield has an inner channel, and the inner channel and the outer peripheral wall of the axial cylinder form the outer spiral ball race.

The present invention provides a ball screw assembly according to independent claim 1. Further examples of a suchlike ball screw assembly are shown in the dependent claims. Detailed description of the characteristics and the advantages of the invention are shown in the following embodiments. The technical content and the implementation of the invention should be readily apparent to any person skilled in the art from the detailed description, and the purposes and the advantages of the invention should be readily understood by any person skilled in the art with reference to content, claims, and drawings in the disclosure.

### BRIEF DESCRIPTION OF THE DRAWINGS

The invention will become more fully understood from the detailed description given herein below for illustration only, and thus not limitative of the disclosure, wherein:
Fig. 1 illustrates a perspective view of a ball screw assembly according to an exemplary embodiment of the invention
Fig. 2 illustrates an exploded view of the ball screw assembly of the exemplary embodiment;
Fig. 3 illustrates an exploded view of the ball screw assembly of the exemplary embodiment from another perspective;
Fig. 4 illustrates a top view of an open nut of the ball screw assembly of the exemplary embodiment; and
Fig. 5 illustrates a top view of a second circulator of the ball screw assembly of the exemplary embodiment.

### DETAILED DESCRIPTION

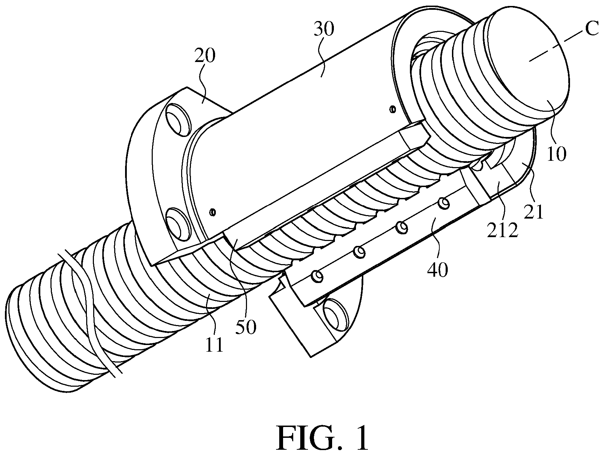

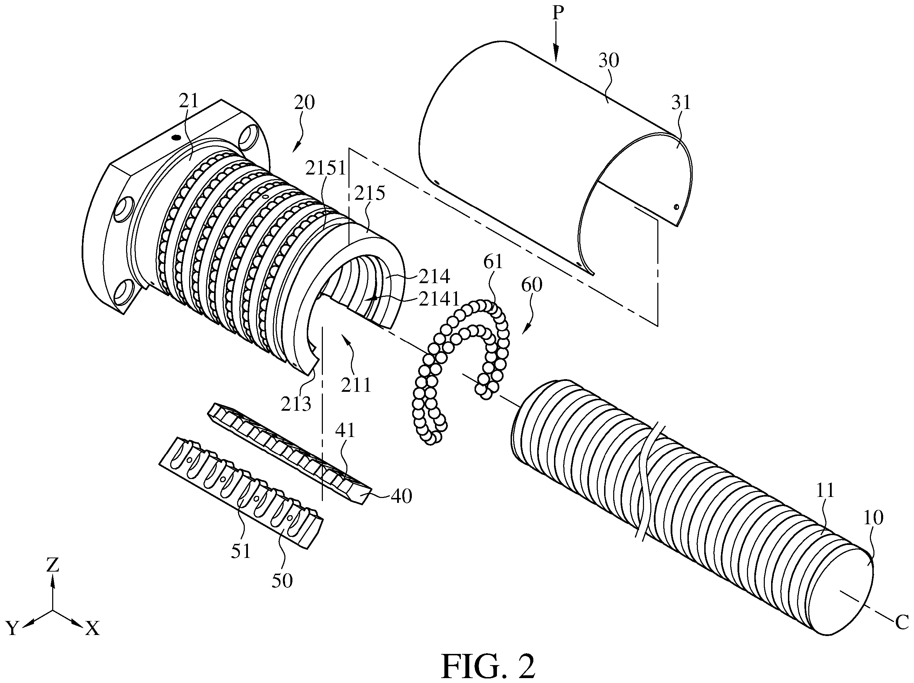

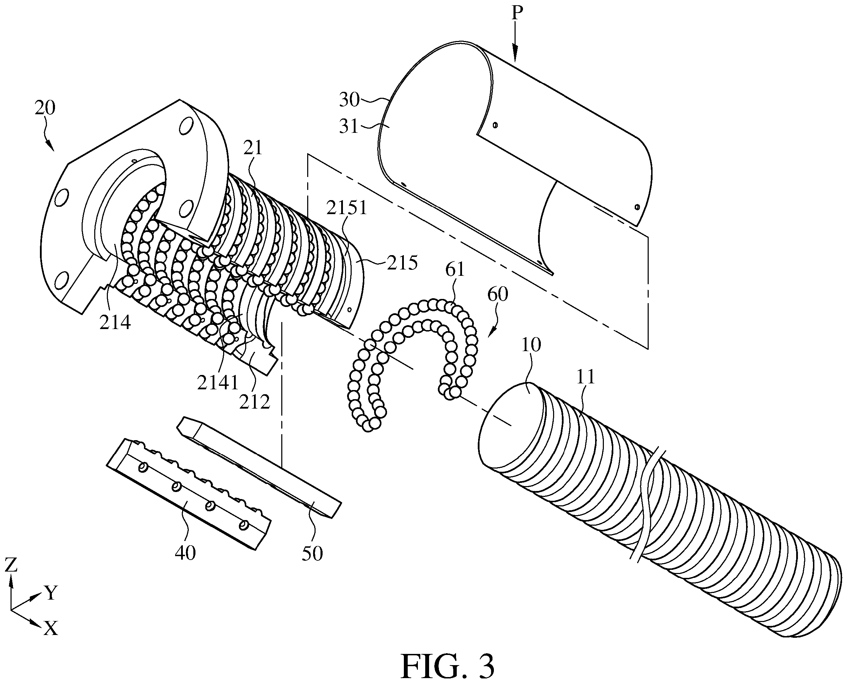

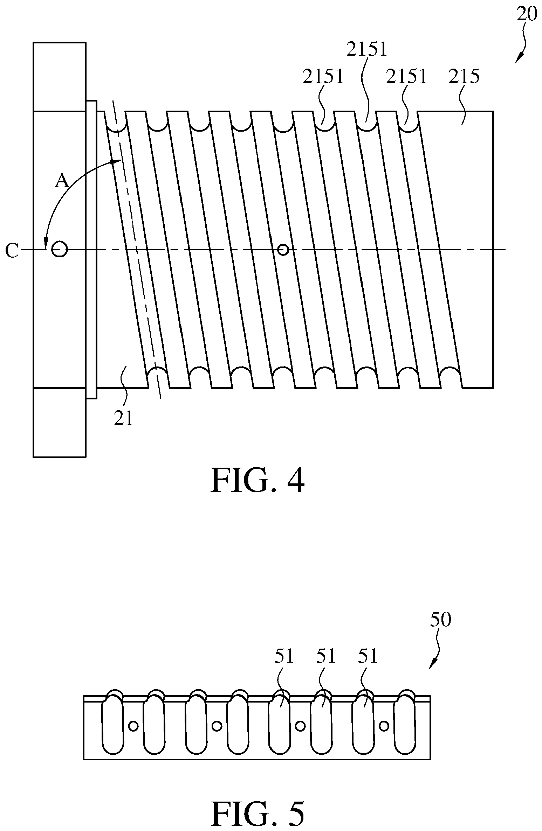

Please refer to Figs. 1 to 5. Fig. 1 illustrates a perspective view of a ball screw assembly according to an exemplary embodiment of the invention. Fig. 2 illustrates an exploded view of the ball screw assembly of the exemplary embodiment. Fig. 3 illustrates an exploded view of the ball screw assembly of the exemplary embodiment from another perspective. Fig. 4 illustrates a top view of an open nut of the ball screw assembly of the exemplary embodiment. Fig. 5 illustrates a top view of a second circulator of the ball screw assembly of the exemplary embodiment.

As shown in Figs. 1 and 2, in this embodiment, the ball screw assembly comprises a guider 10, an open nut 20, an open shield 30, a first circulator 40, a second circulator 50, and a ball circulating assembly 60. The guider 10 may be, for example, a screw or a conversion rod. In this embodiment, the guider 10 is a screw for an illustrative example. As shown in Fig. 1, the guider 10 has a central axis C and a spiral channel 11.

As shown in Figs. 1 and 2, the open nut 20 comprises an axial cylinder 21, and the axial cylinder 21 has an axial opening 211. The axial cylinder 21 has a first axial wall 212 and a second axial wall 213 respectively located at two opposite sides of the axial opening 211. The axial cylinder 21 comprises an inner annular wall 214 and an outer annular wall 215. The inner annular wall 214 has an inner spiral channel 2141. The inner spiral channel 2141 and the spiral channel 11 of the guider 10 correspond to each other and form an inner ball race. Specifically, in this embodiment, the guider 10 has the spiral channel 11 annularly disposed around an outer periphery thereof. The spiral channel 11 is disposed around the outer periphery of the guider 10 to provide a spiral angle. The open nut 20 can be slidably fitted over the guider 10, so that the inner spiral channel 2141 and the spiral channel 11 of the guider 1 correspond to each other and form the inner ball race.

The open shield 30 is axially fitted over an outer periphery of the axial cylinder 21. The open shield 30 has an inner peripheral wall 31. The inner peripheral wall 31 and the outer annular wall 215 of the axial cylinder 21 correspond to each other to form an outer spiral ball race. In this embodiment, to allow the ball circulating assembly 60 to roll in the outer spiral ball race in a circulating manner, an outer channel 2151 is formed on the outer annular wall 215 of the axial cylinder 21. Hence, the outer channel 2151 can correspond to the inner peripheral wall 31 to form the outer spiral ball race.

In the invention , the inner peripheral wall 31 of the open shield 30 may be formed as the inner channel, and the outer annular wall 215 of the axial cylinder 21 is a curved surface, so that the inner channel and the outer annular wall 215 of the axial cylinder 21 form the outer spiral ball race. Alternatively, in some embodiments, the outer annular wall 215 of the axial cylinder 21 has the outer channel 2151 and the inner peripheral wall 31 of the open shield 30 has the inner channel corresponding to the outer channel 2151. Hence, when the open shield 30 is assembled with the axial cylinder 21, the inner channel of the inner peripheral wall 31 and the outer channel 2151 of the outer annular wall 215 form the outer spiral ball race.

Furthermore, the open shield 30 not only can form the outer spiral ball race with the axial cylinder 21 for the ball circulating assembly 60 rolling in the outer channel 2151, but also provides a dustproof function.

In this embodiment, as shown in Figs. 2 and 3, the number of the inner spiral channel 2141 and the number of the outer channel 2151 are both plural, but the embodiment is provided as an illustrative example, not a limitation to the instant disclosure. According to practical requirements, the ball screw assembly may include one inner spiral channel 2141 and one outer channel 2151; in some embodiments, the ball screw assembly may include two or more inner spiral channels 2141 and two or more outer channels 2151. For the sake of clarity, in Figs. 2 and 3, one of the inner spiral channels 2141 and one of the outer channels 2151 are labelled.

Next, please refer to Figs. 2 to 4. An XYZ triaxial coordinate where the axes are perpendicular to each other is illustrated in Fig. 2. In order to clearly present the structure of the ball screw assembly from different viewing angles, the figures are described based on the provided coordinate. As shown in Figs. 2 and 4, the central axis C of the guider 10 extends in the X axis direction. For the sake of convenience, a symmetrical plane is defined and the symmetrical plane is a plane upon the open nut 20 or the open shield 30 is observed from one end of the central axis C (e.g., observed from one end of the X axis direction toward the direction of the X axis having positive values in the figures), and the open nut 20 or the open shield 30 is symmetrical by taking the plane as a linear symmetry reference; that is, in Fig. 2, the plane is a plane formed by the X axis and the Z axis. Moreover, a top viewing direction P is defined as a direction from the top of the figure to the bottom of the figure (viewing toward the direction of the Z axis having negative values). Furthermore, a plane perpendicular to the symmetrical plane and parallel to the central axis C is the plane formed by the X axis and the Y axis shown in Fig. 2, and is also the plane upon the open nut 20 or the open shield 30 is observed from the top viewing direction P. As shown in Fig. 4, in this embodiment, the outer channel 2151 provided as the outer spiral ball race is spirally and annularly disposed on the outer annular wall 215. As indicated by the top viewing direction P, the channel direction of each of the outer channels 2151 is the oblique direction shown in the figure (in this embodiment, the oblique direction is from the upper left to the lower right, and the configuration of the outer channel 2151 is called oblique groove). When the outer channel 2151 and the central axis C are projected along the direction shown in Fig. 4 (i.e., the top viewing direction P) and are projected on the plane (that is, the plane formed by the X axis and the Y axis), in the virtual plane projection of the open nut 21 from the top viewing direction P, the outer channel 2151 is obliquely configured with respect to the central axis C; in other words, the angle A between the outer channel 2151 and the central axis C is not a right angle.

Moreover, the inner spiral channel 2141 and the outer channel 2151 are configured in a spiral manner. When the inner spiral channel 2141 and the outer channel 2151 are spiral grooves with the same helical angle, that is, as indicated in this embodiment, when the inner spiral channel 2141 and the outer channel 2151 are arranged parallel to each other, due to the inner spiral channel 2141 and the outer channel 2151 have the same helical angle, when the ball circulating assembly 60 rolls in the ball circulating race, the ball circulating assembly 60 bears less loading and can roll in the ball circulating race continuously and smoothly, without excessive rolling angle change, thereby preventing from discontinuous rolling performance of the ball circulating assembly 60 in the ball circulating race.

Furthermore, as shown in Figs. 1 to 3 as well as Fig. 5, the first circulator 40 is disposed on the first axial wall 212. The first circulator 40 comprises a first curve 41. Two ends of the first curve 41 are respectively in communication with the inner spiral channel 2141 (the inner ball race) and the outer channel 2151 (the outer spiral ball race). The second circulator 50 is disposed on the second axial wall 213. The second circulator 50 comprises a second curve 51. Two ends of the second curve 51 are respectively in communication with the inner spiral channel 2141 (the inner ball race) and the outer channel 2151 (the outer spiral ball race).

In this embodiment, as shown in Figs. 2 and 5, the number of the first curve 41 and the number of the second curve 51 are both plural, but the instant disclosure are not limited thereto. According to practical requirements, the ball screw assembly may include one first curve 41 and one second curve 51; in some embodiments, the ball screw assembly may include two or more first curves 41 and two or more second curves 51. For the sake of clarity, in Figs. 2 and 3, one of the first curves 41 and one of the second curves 51 are labelled.

The first circulator 40 and the second circulator 50 may be respectively disposed on the first axial wall 212 and the second axial wall 213 using threading, adhering, or engaging techniques. In the case that the threading technique is applied to disposed the circulators on the open nut 20, when the first circulator 40 and the second circulator 50 are worn due to long-term use, a user can simply replace the first circulator 40 and the second circulator 50 with new ones for continued use of the ball screw assembly.

Furthermore, as shown in the embodiment, the first circulator 40 and the second circulator 50 may have the same structure. Hence, during the manufacturing process, one element is manufactured and served as both the first circulator 40 and the second circulator 50. It is understood that, according to practical requirements, the first circulator 40 and the second circulator 50 with different structures may be applied in the ball screw assembly. For instance, the first circulator 40 and the second circulator 50 with different numbers of curves may be applied, or the first circulator 40 and the second circulator 50 with different curve arrangement or different curve spacing may be applied.

Moreover, in this embodiment, the number of the first curve 41 of the first circulator 40 and the number of the second curve 51 of the second circulator 50 are eight as an example, but the instant disclosure is not limited thereto. In some embodiments, the first circulator 40 and the second circulator 50 may respectively have two curves and reduced size. Hence, when the axial cylinder 21 has a small size or when the number of the inner spiral channel 2141 and the number of the outer channel 2151 of the axial cylinder 21 are not too many (e.g., one), the first circulator 40 and the second circulator 50 with fewer curves can be used to match with the axial cylinder 21. When the axial cylinder 21 is to be mated with the first circulator 40 and the second circulator 50 with more curves, several first circulators 40 with two curves and several second circulators 50 with two curves can be locked on the axial cylinder 21 for different practical requirements. Hence, in this embodiment, the manufacturer does not need to manufacture the first circulators 40 and the second circulators 50 in different lengths corresponding to the axial cylinder 21 in different lengths.

As shown in Fig. 2, the ball circulating assembly 60 comprises a plurality of balls 61. As shown in Fig. 1, when the first circulator 40 and the second circulator 50 are assembled on the axial cylinder 21, the first curve 41 of the first circulator 40 on the first axial wall 212 of the axial cylinder 21 is in communication with the inner ball race and the outer spiral ball race, and the second curve 51 of the second circulator 50 on the second axial wall 213 of the axial cylinder 21 is also in communication with the inner ball race and the outer spiral ball race. The inner ball race, the first curve 41, the outer spiral ball race, and the second curve 51 together form a ball circulating race. Accordingly, all of the balls 61 of the ball circulating assembly 60 can roll in the ball circulating race in a circulating manner.

As above, the first circulator 40 and the second circulator 50 are disposed on the axial cylinder 21. Hence, the first circulator 40 is adapted to be in communication with the inner spiral channel 2141 on the inner annular wall 214 of the axial cylinder 21, and the second circulator 50 is adapted to be in communication with the outer channel 2151 on the outer annular wall 215 of the axial cylinder 21. Moreover, under this configuration, the ball circulating assembly 60 can roll from the inner spiral channel 2141 to the outer channel 2151 in a smooth manner.

Moreover, in the foregoing embodiment, the ball screw assembly is described to have a single ball circulating race, but as shown in Figs. 2 and 3, the number of the ball circulating race can be adjusted according to practical requirements; the ball screw assembly may be provided with one ball circulating race, or two or more ball circulating races. According to different loading requirements, for instance, the ball screw assembly may be provided with two ball circulating races or several ball circulating races; alternatively, the ball circulating races may completely cover the entire open nut 20 and the entire open shield 30. Hence, the ball screw assembly can be applied for light and heavy loading requirements.

Further, as shown in Figs. 2 and 3, in this embodiment, one ball circulating assembly 60 is disassembled and for illustrative purpose and also for showing the configuration of the balls 61 of the ball circulating assembly 60 in the ball circulating race. The ball circulating assembly 60 surrounds the inner ball race, the first curve 41, the outer spiral ball race, and the second curve 51 to form a loop, and the ball circulating assembly 60 rolls in a circulating manner in an individual ball circulating race. In practice, as shown in Figs. 2 and 3, the ball screw assembly may be provided with several ball circulating assemblies 60, and each of the ball circulating assemblies 60 individually rolls in the corresponding ball circulating race in a circulating manner.

Accordingly, based on one or some embodiments of the invention, the axial cylinder 21 of the open nut 20 has the axial opening 211. Hence, when the open nut 20 moves along the guider 10, even if a supporting holder (for example, a supporting base (not shown)) is configured below the guider 10, the open nut 20 can pass the portion of the guider 10 having the supporting holder through the axial opening 211, so that the open nut 20 and the supporting holder do not interfere with each other. Therefore, the resilient mechanism of the supporting molder for moving a guider to a position away from the ball screw can be omitted. Moreover, when the open nut 20 passes the portion of the guider 10 having the supporting holder, the supporting holder is retained in a supporting state for the guider 10. Therefore, since the supporting holder does not detach from the guider 10, the guider 10 does not sag or deform, and the manufacturing precision of the ball screw assembly during the application does not seriously affect the performance of the ball screw assembly.

In this embodiment, one ball circulating race is formed by one inner ball race, one first curve 41, one outer spiral ball race, and one second curve 51. All of the balls 61 of one ball circulating assembly 60 can roll in one ball circulating race in a circulating manner. As shown in Figs. 2 and 3, in this embodiment, the ball screw assembly is provided with a plurality of ball circulating races and a plurality of ball circulating assemblies 60, respectively, and each of the ball circulating assemblies 60 individually rolls in the corresponding ball circulating race.

In some other embodiments, the two ends of the first curve 41 are respectively in communication with a first one inner ball race and a second one outer spiral ball race, and the two ends of the second curve 51 are respectively in communication with the first one inner ball race and the second one outer spiral ball race. In detail, in these embodiments, taking the inner spiral channels 2141 (the inner ball races) aligned in order as a first one channel, a second one channel, and so forth, from an end of the axial cylinder 21, and taking the outer channels 2151 (the outer spiral ball races) aligned in order as a first one channel, a second one channel, and so forth, from the end of the axial cylinder 21. In this configuration, one of two ends of the first curve 41 is connected to the first one channel of the outer channels 2151, and the other end of the first curve 41 is connected to the second one channel of the inner spiral channels 2141, rather being connected to the first one channel of the inner spiral channels 2141. Similarly, one of two ends of the second curve 51 is connected to the first one channel of the outer channels 2151, and the other end of the second curve 51 is connected to the second one channel of the inner spiral channels 2141. It is understood that, such configuration may be accomplished by adjusting the inclination of the first curve 41 and the second curve 51.

For example, when the first curve 41 is configured obliquely and the second curve 51 is configured obliquely, the inclinations of the first curve 41 and the second curve 51 can be adjusted to allow the communication between each of the inner spiral channels 2141 and the outer spiral channel 2151 at a different line. Accordingly, the offset configurations for the inner ball race and the outer spiral ball race can be implemented.

As above, the second one channel of the inner ball race, one first curve 41, the first one channel of the outer spiral ball race, and one second curve 51 may together form one ball circulating race. Accordingly, the ball circulating assembly 60 can roll in a circulating manner among the second one channel of the inner ball race, the first curve 41, the first one channel of the outer spiral ball race, and the second curve 51. Hence, circulators with different configurations can be applied in the ball screw assembly, so that the inner ball race and the outer spiral ball race at different lines can be mated with each other to form individual ball circulating races in different combinations. Therefore, according to different loading requirements, the inner ball race and the outer ball race at same lines or different lines can be mated with each other to form the ball circulating race.

In this embodiment, since the inner spiral channel 2141 and the outer channel 2151 are spiral grooves with the same helical angle, the first curve 41 and a short side of the first circulator 40 are arranged parallel to each other, and the second curve 51 and a short side of the second circulator 50 are arranged parallel to each other. In this embodiment, because the first circulator 40 and the second circulator 50 have the same structure, only the second circulator 50 is illustrated in Fig. 5 for illustrative purposes. As shown from Fig. 5, the top view of the second circulator 50, when the number of the second curves 51 of the second circulator 50 is plural, the second curves 51 are aligned parallel to each other, and the second curves 51 are aligned straightly; that is, the second curves 51 are parallel to the short side of the second circulator 50. Similarly, the number of the first curves 41 of the first circulator 40 is plural, and the first curves 41 are aligned parallel to each other. Supposed that the first circulator 40 is arranged to an orientation the same as the second circulator 50 (i.e., the first circulator 40 and the second circulator 50 are viewed from the same viewing angle), the first curves 41 are aligned straightly; that is, the first curves 41 are parallel to the short side of the first circulator 40. Accordingly, upon forming the first curve 41 on the first circulator 40 or forming the second curve 51 on the second circulator 50 in the manufacturing process, the configurations of the first curve 41 and the second curve 51 facilitate the determination of the milling direction for the circulators. Alternatively, upon forming the first circulator 40 or the second circulator 50 by injection molding, the configurations of the first curve 41 and the second curve 51 facilitate the mold manufacture and the demolding process.

Furthermore, in this embodiment, the balls 61 of the ball screw assembly does not need the ball retainer, and the balls 61 can be limited in the ball circulating race formed by the guider 10, the open nut 20, the open shield 30, the first circulator 40, and the second circulator 50 and can roll in the individual ball circulating race, without detaching off the ball circulating race. In other embodiments, the ball screw assembly further comprises a ball retainer, so that the balls 61 of the ball circulating assembly 60 are connected in series by the ball retainer.

While the invention has been described by the way of example and in terms of the preferred embodiments, it is to be understood that the invention need not be limited to the disclosed embodiments. On the contrary, it is intended to cover various modifications and similar arrangements included within the scope of the appended claims.

## Claims

1. Aball screw assembly comprising
a guider (10) having a central axis (C) and a spiral channel (11), wherein the spiral channel (11) is annularly disposed around an outer periphery of the guider (10);
an open nut (20) slidably fitted over the guider (10), wherein the open nut (20) comprises an axial cylinder (21), the axial cylinder (21) has an axial opening (211), the axial cylinder (21) has a first axial wall (212) and a second axial wall (213) respectively located at two opposite sides of the axial opening (211); the axial cylinder (21) comprises an inner annular wall (214) and an outer annular wall (215), the inner annular wall (214) has an inner spiral channel (2141), the inner spiral channel (2141) corresponds to the spiral channel (11) of the guider (10), and the inner spiral channel (2141) and the spiral channel (11) form an inner ball race;
an open shield (30) coaxially fitted over an outer periphery of the axial cylinder (21), wherein the open shield (30) has an inner peripheral wall (31), the inner peripheral wall (31) corresponds to the outer annular wall (215) of the axial cylinder (21), and the inner peripheral wall (31) and the outer annular wall (215) form an outer spiral ball race; wherein in a projection of a virtual plane of the open nut (20), the outer spiral ball race is obliquely configured with respect to the central axis (C), the virtual plane is perpendicular to a symmetrical plane defined on the open shield (30) upon the open shield (30) is observed from one end of the central axis (C), and the virtual plane is parallel to the central axis (C);
a first circulator (40) disposed on the first axial wall (212), wherein the first circulator (40) comprises a first curve (41), and two ends of the first curve (41) are respectively in communication with the inner ball race and the outer spiral ball race;
a second circulator (50) disposed on the second axial wall (213), wherein the second circulator (50) comprises a second curve (51), and two ends of the second curve (51) are respectively in communication with the inner ball race and the outer spiral ball race; and
a ball circulating assembly (60) comprises a plurality of balls (61), wherein the inner ball race, the first curve (41), the outer spiral ball race, and the second curve (51) form a ball circulating race, and the ball circulating assembly (60) rolls in the ball circulating race;
**characterized in that**:
the inner peripheral wall (31) of the open shield (30) has an inner channel, the outer annular wall (215) of the axial cylinder (21) is a curved surface, and the inner channel and the outer peripheral wall (215) of the axial cylinder (21) form the outer spiral ball race.

2. The ball screw assembly according to claim 1, wherein a surface of the inner peripheral wall (31) and the outer annular wall (215) further form a second outer spiral ball race, the two ends of the first curve (41) are respectively in communication with the inner ball race and the second outer spiral ball race, the two ends of the second curve (51) are respectively in communication with the inner ball race and the second outer spiral ball race; the inner ball race, the first curve (41), the second outer spiral ball race, and the second curve (51) form a second ball circulating race, and the ball circulating assembly rolls in the second ball circulating race.

3. The ball screw assembly according to claim 1, wherein the first curve (41) is obliquely configured opposite to a short side of the first circulator (40), and the second curve (51) is obliquely configured opposite to a short side of the second circulator (50).

4. The ball screw assembly according to claim 1, wherein the first curve (41) and a short side of the first circulator (40) are arranged parallel to each other; the second curve (51) and a short side of the second circulator (50) are arranged parallel to each other.

5. The ball screw assembly according to claim 1, wherein the first circulator (40) comprises a plurality of the first curves (41), and the first curves (41) are arranged parallel to each other; wherein the second circulator (50) comprises a plurality of the second curves (51), and the second curves (51) are arranged parallel to each other.

6. The ball screw assembly according to claim 1, further comprising a ball retainer, the balls (61) are connected in series by the ball retainer.

7. The ball screw assembly according to claim 1, wherein the outer annular wall (215) of the axial cylinder (21) has an outer channel (2151), and the outer channel (2151) and the inner peripheral wall (31) form the outer spiral ball race.

8. The ball screw assembly according to claim 7, wherein the inner peripheral wall (31) of the open shield (30) has an inner channel corresponding to the outer channel (2151), and the outer channel (2151) and the inner channel form the outer spiral ball race.

## Patentansprüche

1. Kugelgewindevorrichtung, aufweisend:
eine Führungsvorrichtung (10), welche eine Mittelachse (C) und eine spiralförmige Rille (11) hat, wobei die spiralförmige Rille (11) ringförmig um einen Außenumfang der Führungsvorrichtung (10) herum angeordnet ist,
eine offene Mutter (20), welche bewegbar auf die Führungsvorrichtung (10) aufgesetzt ist, wobei die offene Mutter (20) einen Axialzylinder (21) aufweist, der Axialzylinder (21) eine Axialöffnung (211) hat, der Axialzylinder (21) eine erste Axialwand (212) und eine zweite Axialwand (213) hat, welche in jeweils zugeordneter Weise an zwei entgegengesetzten Seiten der Axialöffnung (211) angeordnet sind, der Axialzylinder (21) eine Innen-Ring-Wand (214) und eine Außen-Ring-Wand (215) aufweist, die Innen-Ring-Wand (214) eine innere spiralförmige Rille (2141) hat, die innere spiralförmige Rille (2141) mit der spiralförmigen Rille (11) der Führungsvorrichtung (10) korrespondiert, und die innere spiralförmige Rille (2141) und die spiralförmige Rille (11) eine innere Kugellaufbahn bilden,
eine offene Abschirmungsvorrichtung (30), welche koaxial auf einen Außenumfang des Axialzylinders (21) aufgesetzt ist, wobei die offene Abschirmungsvorrichtung (30) eine Innenumfangswand (31) hat, die Innenumfangswand (31) mit der Außen-Ring-Wand (215) des Axialzylinders (21) korrespondiert, und die Innenumfangswand (31) und die Außen-Ring-Wand (215) eine äußere spiralförmige Kugellaufbahn bilden, wobei in einer Projektion einer virtuellen Ebene der offenen Mutter (20) die äußere spiralförmige Kugellaufbahn mit Bezug auf die Mittelachse (C) schräg konfiguriert ist, die virtuelle Ebene senkrecht zu einer Symmetrieebene ist, welche an der offenen Abschirmungsvorrichtung (30) definiert ist, wenn die offene Abschirmungsvorrichtung (30) von einem Ende der Mittelachse (C) aus betrachtet wird, und wobei die virtuelle Ebene parallel zu der Mittelachse (C) ist,
eine erste Umlaufvorrichtung (40), welche an der ersten Axialwand (212) angeordnet ist, wobei die erste Umlaufvorrichtung (40) eine erste Krümmung (41) aufweist, und zwei Enden der ersten Krümmung (41) in jeweils zugeordneter Weise mit der inneren Kugellaufbahn und der äußeren spiralförmigen Kugellaufbahn in Verbindung stehen,
eine zweite Umlaufvorrichtung (50), welche an der zweiten Axialwand (213) angeordnet ist, wobei die zweite Umlaufvorrichtung (50) eine zweite Krümmung (51) aufweist, und zwei Enden der zweiten Krümmung (51) in jeweils zugeordneter Weise mit der inneren Kugellaufbahn und der äußeren spiralförmigen Kugellaufbahn in Verbindung stehen, und
wobei eine Kugelumlaufvorrichtung (60) eine Vielzahl von Kugeln (61) aufweist, wobei die innere Kugellaufbahn, die erste Krümmung (41), die äußere spiralförmige Kugellaufbahn und die zweite Krümmung (51) eine Kugelumlaufbahn bilden, und die Kugelumlaufvorrichtung (60) in der Kugelumlaufbahn rollt,
**dadurch gekennzeichnet, dass**:
die Innenumfangswand (31) der offenen Abdeckungsvorrichtung (30) eine innere Rille hat, die Außen-Ring-Wand (215) des Axialzylinders (21) eine gekrümmte Fläche ist, und die innere Rille und die Außenumfangswand (215) des Axialzylinders (21) die äußere spiralförmige Kugellaufbahn bilden.

2. Kugelgewindevorrichtung gemäß Anspruch 1, wobei eine Fläche der Innenumfangswand (31) und die Außen-Ring-Wand (215) ferner eine zweite äußere spiralförmige Kugellaufbahn bilden, die zwei Enden der ersten Krümmung (41) in jeweils zugeordneter Weise mit der inneren Kugellaufbahn und der zweiten äußeren spiralförmigen Kugellaufbahn in Verbindung stehen, die zwei Enden der zweiten Krümmung (51) in jeweils zugeordneter Weise mit der inneren Kugellaufbahn und der zweiten äußeren spiralförmigen Kugellaufbahn in Verbindung stehen, wobei die innere Kugellaufbahn, die erste Krümmung, die zweite äußere spiralförmige Kugellaufbahn und die zweite Krümmung eine zweite Kugelumlaufbahn bilden, und wobei die Kugelumlaufvorrichtung (60) in der zweiten Kugelumlaufbahn rollt.

3. Kugelgewindevorrichtung gemäß Anspruch 1, wobei die erste Krümmung (41) mit Bezug auf eine kurze Seite der ersten Umlaufvorrichtung (40) schräg konfiguriert ist, und die zweite Krümmung (51) mit Bezug auf eine kurze Seite der zweiten Umlaufvorrichtung (50) schräg konfiguriert ist.

4. Kugelgewindevorrichtung gemäß Anspruch 1, wobei die erste Krümmung (41) und eine kurze Seite der ersten Umlaufvorrichtung (40) parallel zueinander angeordnet sind, wobei die zweite Krümmung (51) und eine kurze Seite der zweiten Umlaufvorrichtung (50) parallel zueinander angeordnet sind.

5. Kugelgewindevorrichtung gemäß Anspruch 1, wobei die Erste Umlaufvorrichtung (40) eine Vielzahl von ersten Krümmungen (41) aufweist, und die ersten Krümmungen (41) parallel zueinander angeordnet sind, wobei die zweite Umlaufvorrichtung (50) eine Vielzahl von zweiten Krümmungen (51) aufweist, und die zweiten Krümmungen (51) parallel zueinander angeordnet sind.

6. Kugelgewindevorrichtung gemäß Anspruch 1, welche ferner eine Kugelhaltevorrichtung aufweist, wobei die Kugeln (61) mittels der Kugelhaltevorrichtung in Reihe verbunden sind.

7. Kugelgewindevorrichtung gemäß Anspruch 1, wobei die Außen-Ring-Wand (215) des Axialzylinders (21) eine äußere Rille (2151) hat, und die äußere Rille (2151) und die Innenumfangswand (31) die äußere spiralförmige Kugellaufbahn bilden.

8. Kugelgewindevorrichtung gemäß Anspruch 7, wobei die Innenumfangswand (31) der offenen Abschirmungsvorrichtung (30) eine innere Rille hat, welche mit der äußeren Rille (2151) korrespondiert, und wobei die äußere Rille (2151) und die innere Rille die äußere spiralförmige Kugellaufbahn bilden.

## Revendications

1. Un assemblage de vis à billes comprenant
un guide (10) présentant un axe central (C) et un canal en spirale (11), dans lequel le canal en spirale (11) est disposé de manière annulaire autour d'une périphérie extérieure du guide (10) ;
un écrou ouvert (20) monté de manière coulissante sur le guide (10), dans lequel l'écrou ouvert (20) comprend un cylindre axial (21), le cylindre axial (21) présente une ouverture axiale (211), le cylindre axial (21) présente une première paroi axiale (212) et une seconde paroi axiale (213) situées respectivement des deux côtés opposés de l'ouverture axiale (211) ; le cylindre axial (21) comprend une paroi annulaire intérieure (214) et une paroi annulaire extérieure (215), la paroi annulaire intérieure (214) présente un canal en spirale intérieur (2141), le canal en spirale intérieur (2141) correspond au canal en spirale (11) du guide (10), et le canal en spirale intérieur (2141) et le canal en spirale (11) forment un chemin de roulement à billes intérieur ;
un écran ouvert (30) monté coaxialement sur une périphérie extérieure du cylindre axial (21), dans lequel l'écran ouvert (30) présente une paroi périphérique intérieure (31), la paroi périphérique intérieure (31) correspond à la paroi annulaire extérieure (215) du cylindre axial (21), et la paroi périphérique intérieure (31) et la paroi annulaire extérieure (215) forment un chemin de roulement à billes en spirale extérieur ; dans lequel, dans une projection d'un plan virtuel de l'écrou ouvert (20), le chemin de billes en spirale externe est configuré de manière oblique par rapport à l'axe central (C), le plan virtuel est perpendiculaire à un plan symétrique défini sur le bouclier ouvert (30) lorsque le bouclier ouvert (30) est observé depuis une extrémité de l'axe central (C), et le plan virtuel est parallèle à l'axe central (C) ;
un premier circulateur (40) disposé sur la première paroi axiale (212), dans lequel le premier circulateur (40) comprend une première courbe (41), et deux extrémités de la première courbe (41) sont respectivement en communication avec le chemin de roulement à billes intérieur et le chemin de roulement à billes en spirale extérieur ;
un second circulateur (50) disposé sur la seconde paroi axiale (213), dans lequel le second circulateur (50) comprend une seconde courbe (51), et deux extrémités de la seconde courbe (51) sont respectivement en communication avec le chemin de roulement à billes intérieur et le chemin de roulement à billes en spirale extérieur ; et
un ensemble de circulation de billes (60) comprend une pluralité de billes (61), dans lequel la piste de billes intérieure, la première courbe (41), la piste de billes extérieure en spirale et la seconde courbe (51) forment une piste de circulation de billes, et l'ensemble de circulation de billes (60) roule dans la piste de circulation de billes ;
**caractérisé en ce que** :
la paroi périphérique intérieure (31) du bouclier ouvert (30) présente un canal intérieur, la paroi annulaire extérieure (215) du cylindre axial (21) est une surface incurvée, et le canal intérieur et la paroi périphérique extérieure (215) du cylindre axial (21) forment le chemin de roulement à billes en spirale extérieur.

2. Ensemble de vis à billes selon la revendication 1, dans lequel une surface de la paroi périphérique intérieure (31) et de la paroi annulaire extérieure (215) forme en outre un second chemin de billes en spirale extérieur, les deux extrémités de la première courbe (41) sont respectivement en communication avec le chemin de billes intérieur et le second chemin de billes en spirale extérieur, les deux extrémités de la seconde courbe (51) sont respectivement en communication avec le chemin de billes intérieur et le second chemin de billes en spirale extérieur ; le chemin de billes intérieure, la première courbe (41), le second chemin de billes extérieure en spirale, et la seconde courbe (51) forment un second chemin de circulation de billes, et l'ensemble de circulation de billes roule dans le second chemin de circulation de billes.

3. Ensemble de vis à billes selon la revendication 1, dans lequel la première courbe (41) est configurée de manière oblique à l'opposé d'un côté court du premier circulateur (40), et la seconde courbe (51) est configurée de manière oblique à l'opposé d'un côté court du second circulateur (50).

4. Ensemble de vis à billes selon la revendication 1, dans lequel la première courbe (41) et un côté court du premier circulateur (40) sont disposés parallèlement l'un à l'autre ; la deuxième courbe (51) et un côté court du deuxième circulateur (50) sont disposés parallèlement l'un à l'autre.

5. Ensemble de vis à billes selon la revendication 1, dans lequel le premier circulateur (40) comprend une pluralité de premières courbes (41), et les premières courbes (41) sont disposées parallèlement les unes aux autres ; dans lequel le second circulateur (50) comprend une pluralité de secondes courbes (51), et les secondes courbes (51) sont disposées parallèlement les unes aux autres.

6. Ensemble de vis à billes selon la revendication 1, comprenant en outre un dispositif de retenue de billes, les billes (61) étant connectées en série par le dispositif de retenue de billes.

7. Ensemble de vis à billes selon la revendication 1, dans lequel la paroi annulaire extérieure (215) du cylindre axial (21) comporte un canal extérieur (2151), et le canal extérieur (2151) et la paroi périphérique intérieure (31) forment le chemin de roulement à billes en spirale extérieur.

8. Ensemble de vis à billes selon la revendication 7, dans lequel la paroi périphérique intérieure (31) du bouclier ouvert (30) a un canal intérieur correspondant au canal extérieur (2151), et le canal extérieur (2151) et le canal intérieur forment le chemin de roulement à billes en spirale extérieur.
